(19) Europäisches Patentamt
European Patent Office
Office européen des brevets

(11) Veröffentlichungsnummer : **0 388 440 B1**

(12) **EUROPÄISCHE PATENTSCHRIFT**

(45) Veröffentlichungstag der Patentschrift :
24.07.91 Patentblatt 91/30

(51) Int. Cl.⁵ : **B62D 5/24, B62D 5/06**

(21) Anmeldenummer : **89901852.7**

(22) Anmeldetag : **01.02.89**

(86) Internationale Anmeldenummer :
**PCT/EP89/00081**

(87) Internationale Veröffentlichungsnummer :
**WO 89/07064 10.08.89 Gazette 89/18**

(54) **HYDRAULISCHE HILFSKRAFTLENKUNG.**

(30) Priorität : **04.02.88 DE 3803206**

(43) Veröffentlichungstag der Anmeldung :
**26.09.90 Patentblatt 90/39**

(45) Bekanntmachung des Hinweises auf die
Patenterteilung :
**24.07.91 Patentblatt 91/30**

(84) Benannte Vertragsstaaten :
**DE IT**

(56) Entgegenhaltungen :
**EP-A- 218 982
DE-A- 2 504 892
GB-A- 2 055 716
US-A- 3 315 570
US-A- 4 773 303**

(73) Patentinhaber : **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder : **ELSER, Dieter
Jägerstrasse 10
W-7087 Essingen (DE)**

## Beschreibung

Die Erfindung betrifft eine Hilfskraftlenkung nach dem Oberbegriff von Anspruch 1.

Hilfskraftlenkungen mit einem in das Lenkgehäuse eingebauten Arbeitskolben (Blockbauweise) sind mit Abschalteinrichtungen ausgerüstet, die vor Erreichen der Endanschläge die Hilfskraft in dem jeweils unter Arbeitsdruck stehenden Druckraum abschalten. Dabei finden mit Stößeln verbundene Sitzventile Anwendung, die durch die kombinierte Kraft einer Feder und des Arbeitsdruckes in ihre Schließstellung gedrückt werden. Bei Erreichen der Endstellung des Arbeitskolbens berührt ein Stößel eine Gehäusewand und das zugehörige Abschaltventil öffnet. Der in der Arbeitskammer wirksame Hochdruck baut sich dann über eine die Abschalteinrichtung enthaltende Durchgangsbohrung sowie über die entlastete Arbeitskammer ab. Derartige Abschalteinrichtungen sind z.B aus der DE-PS 25 04 892 und der DE-OS 29 30 498 bekannt.

Aus einem Prospekt der Ross Gear Division, TRW Steering Components Group, 8000 Heath Street, Lafayette, IN 47902, USA, mit dem Titel "Integral Power Steering Gear — Applications Guide" aus dem Jahre 1987 geht es bereits als bekannt hervor, bei der Erstmontage die Einstellung der Abschaltventile in den Endlagen des Lenkausschlages nicht mehr von Hand vorzunehmen. Vielmehr stellen sich die Abschaltventile nach der Montage der Lenkung im Fahrzeug durch einmaliges mechanisches Anlenken gegen die Radanschläge von selbst ein. Hierzu ist die Lenkbegrenzung nach dem Prospekt so aufgebaut, daß man eine innere Hülse (Seat) in einer äußereren Hülse (Sleeve) verschieblich einpreßt. Die äußere Hülse sitzt fest in einer axialen Durchgangsbohrung des Arbeitskolbens. Die innere Hülse steht nach der Lenkungsmontage weit aus der äußeren Hülse und dem Arbeitskolben hervor. Beim mechanischen Anlenken an die Radanschläge berührt die innere Hülse frühzeitig eine radiale Gehäusewand und schiebt sich in die Durchgangsbohrung auf das erforderliche Maß hinein.

Die innere Hülse bildet den Sitz für das Abschaltventil, dessen Kolben federbelastet ist. Ein nach außen gerichteter Stößel des Abschaltkolbens ragt um wenige Millimeter aus dem Arbeitskolben hervor, so daß sich der hydraulische Druck abbaut, sobald der Stößel mit der radialen Gehäusewand in Kontakt kommt.

In dieser bekannten, selbsttätig einstellbaren Lenkbegrenzung muß man die Passung zwischen der äußeren und der inneren Hülse mit sehr großer Genauigkeit herstellen. Bereits bei geringen Abweichungen kann man eine Gefährdung der Lenkungsfunktion und damit der Fahrsicherheit nicht mehr ausschließen. Bei zu geringer Pressung der beiden Hülsen kann nämlich die innere Hülse infolge des Betriebsdruckes axial nach außen wandern. Der Betriebsdruck wirkt über den jeweils unter Arbeitsdruck stehenden Druckraum und das diesem Druckraum benachbarte Abschaltventil im Arbeitskolben im Inneren der Durchgangsbohrung, und damit auch auf das unter Arbeitsdruck stehende Abschaltventil.

Die Gefahr des "Wanderns" der inneren Hülse nach außen vergrößert sich außerdem dadurch, daß der Arbeitsdruck beim Überfahren von Hindernissen infolge der Ölmassenträgheit kurzzeitig eine über 50 prozentige Erhöhung des durch ein Druckbegrenzungsventil eingestellten Höchstdruckes erreichen kann.

Aus der US-PS 33 15 570 ist es weiterhin bekannt, in das Ende eines Arbeitskolbens einen Verschlußstopfen einzusetzen, der in Ventilkörpern zwei Sitzventile enthält. Diese Sitzventile haben Bohrungen, in die man für jede Lenkrichtung eine Anschlagstange einpreßt. Das Einpressen dieser Anschlagstangen auf das exakte Abschaltmaß in den Lenkausschlagstellungen der Räder erfolgt einerseits durch einmaliges mechanisches Anlenken an einen Deckel und andererseits durch Anlenken an eine Lenkspindel. Auch hier kann man nicht ausschließen, daß sich die Stellung der Anschlagstangen durch den hohen Betriebsdruck während der Betriebszeit verändert. Außerdem ist diese Abschateinrichtung verhältnismäßig aufwendig und muß mit hoher Genauigkeit gefertigt werden.

Ein weiteres Ausführungsbeispiel dieser US-PS zeigt in einen Lenkzylinder eingepreßte Anschlagringe. Auch diese Ringe lassen sich durch einmaliges mechanisches Anlenken in ihre Endstellungen bringen. Solche Anschlagringe benötigen zusätzliche axiale Einbaulänge, die in einer Kurzbau-Lenkung nicht zur Verfügung steht. Beim Einpressen der Anschlagringe entstehen Riefen in der Zylinderlauffläche, die im Betrieb die Kolbendichtung beschädigen.

Es ist Aufgabe der Erfindung, für Kurzbau-Lenkungen der Gattung des Anspruchs 1 eine selbsteinstellende hydraulische Lenkbegrenzung zu finden, die keinen zusätzlichen axialen Raumbedarf hat und mit welcher eine einwandfreie Abschaltfunktion unter allen Betriebszuständen gesichert ist.

Diese Aufgabe ist durch die Merkmale des Anspruchs 1 gelöst. Die Unteransprüche enthalten vorteilhafte Ausgestaltungen der Erfindung.

Nach der Erfindung sieht man zur Begrenzung des Kolbenweges als Anschlag für den Stößel des Abschaltventils in den radialen Wänden des Gehäuses Büchsen vor.

Die offene Seite der Büchse ist dabei dem Stößel zugewandt. Dies verkürzt den axialen Raumbedarf. Zur Montage und zum Einstellen der Hilfskraftlenkung ist das Fahrzeug aufgebockt. Das Lenkgetriebe und die gelenkten Räder lassen sich daher leicht von Hand, also ohne Hilfskraft, betätigen. Die beschaltventile stellt man dadurch ein, daß man beim Drehen des Lenkhandrades gegen die Radanschläge die Büchsen mit dem Arbeitskolben auf den passenden Abstand in die zugehörige Bohrung der Wand eindrückt. Die Büchsen lassen sich vorteilhaft durch eine kleine Bohrung in ihrem Boden druckentlasten. Dies hat den Vorteil, daß auf beiden Seiten Druckgleichheit herrscht und daher keine hydraulischen Verstellkräfte auf die Büchsen einwirken. Sollte es vorkommen, daß die Haltekräfte der Büchse in der Bohrung durch Toleranzabweichungen zu gering sind, so wird der hydraulisch unterstützte Hub des Arbeitskolbens und damit der Lenkausschlag größer. Eine solche Konzeption ist weitaus sicherer als eine Verringerung des hydraulisch unterstützten Lenkausschlages. Zur besseren Haftung der Büchsen in ihren Bohrungen sieht man an den Büchsen Ringwülste vor. Außerdem ist es vorteilhaft, die Aufnahmebohrungen der Büchsen von außen zugänglich zu machen. Auf diese Weise lassen sich bei einem späteren Aus- und Wiedereinbau der Lenkung in ein anderes Fahrzeug die Büchsen ohne Lenkungsdemontage aus ihren Bohrungen weiter herausdrücken und durch Lenken gegen die Endanschläge wieder neu einstellen.

Die Fig. 1 der Zeichnung zeigt ein vereinfachtes Ausführungsbeispiel einer Hilfskraftlenkung im Schnitt mit den selbsteinstellenden Abschaltventilen nach der Erfindung.

Fig. 2 zeigt einen vergrößerten Ausschnitt II der Fig. 1.

Die Hilfskraftlenkung besteht aus einem als Zylinder ausgeführten Lenkgehäuse 1, in welchem sich ein Arbeitskolben 2 verschieben kann. Der Arbeitskolben 2 greift mit einer Verzahnung 3 in eine Segmentwelle 4 ein. Außerdem steht der gleichzeitig als Lenkmutter dienende Arbeitskolben 2 über eine Kugelkette 5 mit einer Lenkschnecke 6 in Eingriff. Die Lenkschnecke 6 steht mit einer Lenkspindel 7 in Verbindung. Zu beiden Seiten des Arbeitskolbens 2 befinden sich Druckräume 10 und 11. Eine Hochdruckpumpe 12 fördert Drucköl aus einem Behälter 13 über eine Druckleitung 14 zu einem durch die Drehbewegung der Lenkspindel ansteuerbaren Lenkventil (nicht dargestellt). In der Neutralstellung des Lenkventils strömt das Drucköl über eine Rücklaufleitung 15 zum Behälter 13 ab. Zwischen der Druckleitung 14 und der Rücklaufleitung 15 sitzt ein Druckbegrenzungsventil 16.

Der Arbeitskolben 2 enthält in einer achsparallelen Durchgangsbohrung 17 zwei Abschaltkolben 20 und 21. Eine schwache Feder 18 drückt die Abschaltkolben 20 und 21 in ihrer Grundstellung gegen Sitze 22 und 23. Jeder Kolben 20 und 21 hat einen Stößel 24 und 25.

Nach der Erfindung preßt man in Bohrungen 26 und 27 der radial zur Lenkschnecke 6 verlaufenden Wände 30 und 31 Büchsen 32 und 33 ein. Die offene Seite der Büchsen 32 und 33 ist den Stößeln 24 und 25 zugewandt, so daß diese in die Büchsen beim Verschieben des Arbeitskolbens 2 eintauchen können. Durch kleine Bohrungen 34 und 35 entlastet man die Büchsen 32 und 33 vom Arbeitsdruck.

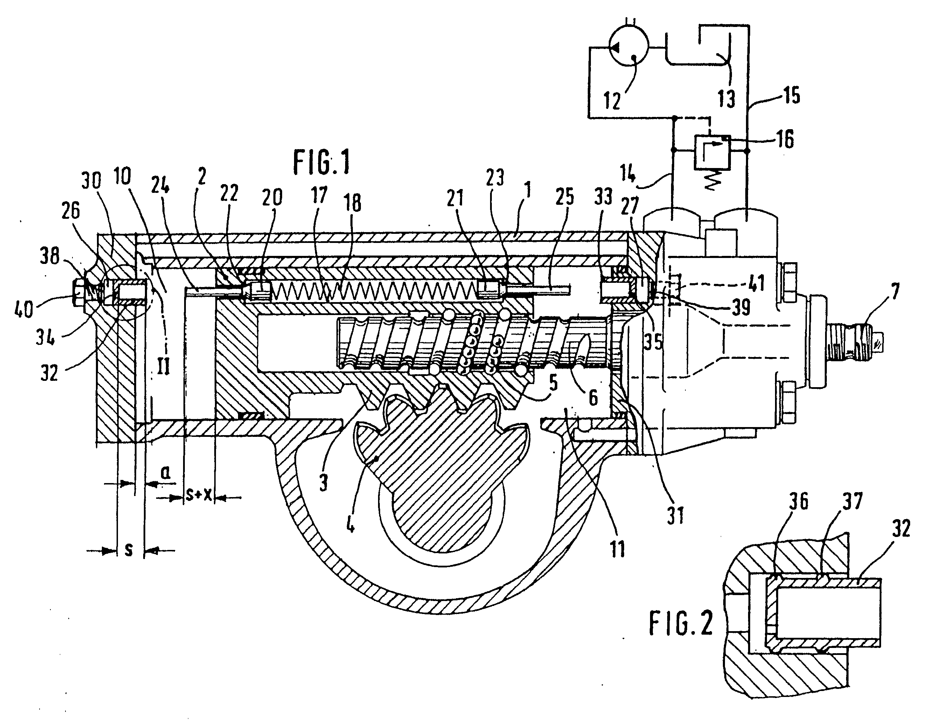

Zum Verbessern der Haftung kann man entsprechend Fig. 2 an den Büchsen 32, 33 Ringwülste 36, 37 vorsehen. Durch diese Ringwülste 36, 37 läßt sich bei gleichen Einpreßkräften das radiale Übermaß vergrößern. Die Durchmessertoleranzen können somit bei gleich guter axialer Befestigungssicherheit größer sein.

Bei der Montage der Lenkung drückt man zunächst die Büchsen 32 und 33 nur wenig in ihre Bohrungen 26 und 27 ein. Zum Einstellen lenkt man einmal gegen die beiden Radanschläge, so daß der Arbeitskolben 2 die Büchsen 32 und 33 weiter in die Bohrungen 26 bzw. 27 hineindrückt. Dabei stellt sich das Einpreßmaß a selbsttätig ein. Da der Stößel 24 bzw. 25 um x Millimeter weiter aus dem Arbeitskolben 2 hervorsteht als der Tiefe s der Innernbohrung der Büchse 32 bzw. 33 entspricht, wird im normalen Lenkbetrieb die hydraulische Kraft innerhalb des Maßes x vor Erreichen des Radanschlages abgeschaltet. Dies bedeutet, daß z.B. bei nach links bewegtem Arbeitskolben 2 der durch den Stößel 24 aufgestoßene Abschaltkolben 20 den unter Arbeitsdruck stehenden Druckraum 11 über den bereits bei einem niedrigen Druck öffnenden Abschaltkolben 21 und die Durchgangsbohrung 17 mit dem entlasteten Druckraum 10 verbindet.

Es gibt Sonderfälle, in welchen sich eine Hilfskraftlenkung mit geringem Montageaufwand aus einem Fahrzeug aus- und in ein anderes Fahrzeug wieder einbauen lassen sollte. Damit man dann die Lenkung zum Neueinstellen der Abschaltventile nicht demontieren muß, sieht man Bohrungen 38, 39 vor, durch die man zum Zurückdrücken der Büchsen 34, 35 ein Werkzeug einführen kann. Die Büchsen 38, 39 lassen sich somit im neuen Fahrzeug wieder in der bereits beschriebenen Weise einstellen. Schrauben 40 und 41 verhindern das Eindringen von Schmutz.

Bezugszeichen

| | | | | |
|---|---|---|---|---|
| 1 | Lenkgehäuse | | 35 | kleine Bohrung |
| 2 | Arbeitskolben | | 36 | Ringwulst |
| 3 | Verzahnung | | 37 | Ringwulst |
| 4 | Segmentwelle | | 38 | Bohrung |
| 5 | Kugelkette | | 39 | Bohrung |
| 6 | Lenkschnecke | | 40 | Schraube |
| 7 | Lenkspindel | | 41 | Schraube |
| 8 | - | | | |
| 9 | - | | | |
| 10 | Druckraum | | | |
| 11 | Druckraum | | | |
| 12 | Hochdruckpumpe | | | |
| 13 | Behälter | | | |
| 14 | Druckleitung | | | |
| 15 | Rücklaufleitung | | | |
| 16 | Druckbegrenzungsventil | | | |
| 17 | Durchgangsbohrung | | | |
| 18 | Feder | | | |
| 19 | - | | | |
| 20 | Abschaltkolben | | | |
| 21 | Abschaltkolben | | | |
| 22 | Sitz | | | |
| 23 | Sitz | | | |
| 24 | Stößel | | | |
| 25 | Stößel | | | |
| 26 | Bohrung für 32 | | | |
| 27 | Bohrung für 33 | | | |
| 38 | - | | | |
| 29 | - | | | |
| 30 | Wand | | | |
| 31 | Wand | | | |
| 32 | Büchse | | | |
| 33 | Büchse | | | |
| 34 | kleine Bohrung | | | |

## Patentansprüche

1. Hydraulische Hilfskraftlenkung, insbesondere für Kraftfahrzeuge mit folgenden Merkmalen :
— In einem Gehäuse ist ein auf einer Gewindespindel verschiebbarer Arbeitskolben gelagert ;
— es ist ein Lenkventil vorhanden, welches Drucköl in stirnseitige Arbeitskammern des Arbeitskolbens einsteuert ;
— in einer axialen Durchgangsbohrung des Arbeitskolbens sind als Lenkbegrenzung beidseitig Abschaltventile mit aus den Arbeitskolben herausragenden Stößeln eingesetzt ;
— die Betätigung der Abschaltventile erfolgt beim Anlaufen der Stößel an radiale Wände des Gehäuses ;
— die Einstellung der Abschaltventile zur Begrenzung des hydraulisch unterstützten Kolbenweges in den Endlagen erfolgt durch Drehung des Lenkhandrades von Anschlag zu Anschlag selbsttätig bei der Erstmontage, **gekennzeichnet** durch folgende Merkmale :
zur Begrenzung des Kolbenweges sind in die radialen Wände (30, 31) mit den Stößeln (24, 25) der Abschaltventile (20, 22 ; 21, 23) zusammenwirkende Büchsen (32, 33) eingesetzt, die sich durch Bewegen des Arbeitskolbens (2) in seine Endstellungen auf das Einpreßmaß (a) eindrücken lassen.

2. Hydraulische Hilfskraftlenkung nach Anspruch 1, dadurch **gekennzeichnet**, daß die offene Seite der Büchse (32, 33) dem Stößel (24, 25) zugewandt ist.

3. Hydraulische Hilfskraftlenkung nach Anspruch 1, dadurch **gekennzeichnet**, daß der Boden der Büchse (32, 33) eine kleine Bohrung (34, 35) aufweist, so daß die Büchse druckentlastet ist.

4. Hydraulische Hilfskraftlenkung nach Anspruch 1, dadurch **gekennzeichnet**, daß die Büchse (32, 33) mit Ringwülsten (36 bzw. 37) versehen ist.

5. Hydraulische Hilfskraftlenkung nach Anspruch 1, dadurch **gekennzeichnet**, daß Bohrungen (26, 27) für die Aufname der Büchsen (34, 35) durch nach außen führende, mit Schrauben (40, 41) verschlossene Bohrungen (38, 39) zugänglich sind.

## Claims

1. Hydraulic power-assisted steering unit, in particular for vehicles, having the following features :
— a movable working piston is mounted on a threaded spindle in a housing
— a steering valve is provided which guides pressurised oil into operating chambers in the face of the working piston
— shut-off valves are mounted on both sides of an axial bore passing through the working piston to limit steering movement, having tappets which protrude from the working piston
— the shut-off valves are actuated when the tappets contact the radial walls of the housing
— adjustment of the shut-off valves to limit the hydraulically-supported piston travel within the limit positions is achieved by turning the steering wheel from lock to lock during initial assembly,
**characterized by** the following features :
to restrict piston travel, bushes (32, 33) are located in the radial walls (30, 31) which operate with the tappets (24, 25) in the shut-off valves (20, 22, 21, 23) and which are pressed into press position (a) when the working piston (2) moves between its limit positions.

2. Hydraulic power-assisted steering unit as claimed in claim 1,
**characterized in that** the open side of each bush (32, 33) faces a tappet (24, 25).

3. Hydraulic power-assisted steering unit as claimed in claim 1,
**characterized in that** the base of each bush (32, 33) has a small bore (34, 35) to relieve pressure in the bush.

4. Hydraulic power-assisted steering unit as claimed in claim 1,
**characterized in that** the bushes (32, 33) are provided with rounded annular protrusions (36 and 37 respectively)

5. Hydraulic power-assisted steering unit as claimed in claim 1,
**characterized in that** bores (26, 27) which accommodate the bushes (34, 35) can be accessed via outwards-facing bores (38, 39) which are sealed with screws (40, 41).

## Revendications

1. Dispositif de direction hydraulique auto-assisté conçu en particulier pour les véhicules présentant les caractéristiques suivantes :
— un piston de travail réglable est monté sur une broche filetée dans un carter ;

— il existe une valve qui guide l'huile pressurisée dans les compartiments de travail de la face du piston de travail ;

— des valves de coupure sont placées des deux côtés d'un perçage de passage axial traversant le piston de travail avec des poussoirs dépassant du piston de travail afin de limiter la direction ;

— les valves de coupure sont actionnées lorsque les poussoirs entrent en contact avec les parois radiales du carter ;

— le réglage des valves de coupure afin de limiter la course du piston à assistance hydraulique se fait automatiquement en tournant le volant de butée en butée durant le montage initial,

**caractérisé** en ce que :

afin de limiter la course du piston, des douilles (32, 33) sont situées dans les parois radiales (30, 31) qui travaillent avec les poussoirs (24, 25) des valves de coupure (20, 22, 21, 23) et qui sont enfoncées dans la position pressée (a) lorsque le piston de travail se déplace dans ses positions de fin de course.

2. Dispositif de direction hydraulique auto-assisté selon la revendication 1,
**caractérisé en ce que** la face ouverte de chaque douille (32, 33) est tournée vers le poussoir (24, 25).

3. Dispositif de direction hydraulique auto-assisté selon la revendication 1,
**caractérisé en ce que** le fond de chaque douille (32, 33) a un petit perçage (34, 35) permettant l'évacuation de la pression dans la douille.

4. Dispositif de direction hydraulique auto-assisté selon la revendication 1,
**caractérisé en ce que** les douilles (32, 33) sont pourvues de protusions annulaires (36 et 37).

5. Dispositif de direction hydraulique auto-assisté selon la revendication 1,
**caractérisé en ce que** des perçages (26, 27) de fixation des douilles (34, 35) sont accessibles par les perçages menant vers l'extérieur (38, 39) fermés au moyen de vis (40, 41).

FIG.1

FIG.2